# EUROPÄISCHE PATENTSCHRIFT

(11) **EP 1 547 271 B1**
(45) Veröffentlichungstag und Bekanntmachung des Hinweises auf die Patenterteilung: **29.11.2006**
(21) Anmeldenummer: 03757874.7
(22) Anmeldetag: 19.09.2003
(51) Int. Cl.: H04B 5/00

(54) **VORRICHTUNG und Verfahren ZUR ÜBERTRAGUNG DIGITALER SIGNALE ZWISCHEN BEWEGLICHEN EINHEITEN MIT BEEINFLUSSUNG DER SPEKTRALEN EIGENSCHAFTEN**
DEVICE and method FOR TRANSMITTING DIGITAL SIGNALS BETWEEN MOBILE UNITS WITH AN ADAPTATION OF THE SPECTRAL CHARACTERISTICS
DISPOSITIF et procédé DE TRANSMISSION DE SIGNAUX NUMERIQUES ENTRE DES UNITES MOBILES AVEC ADAPTATION DES PROPRIETES SPECTRALES

(30) Priorität: 27.09.2002 DE 10245449
(43) Veröffentlichungstag der Anmeldung: 29.06.2005
(73) Patentinhaber: Schleifring und Apparatebau GmbH, 82256 Fürstenfeldbruck (DE)
(72) Erfinder: KRUMME, Nils, 82340 Feldafing (DE); SCHILLING, Harry, 85072 Eichstätt (DE); LOHR, Georg, 82223 Eichenau (DE)
(74) Vertreter: Lohr, Georg
(86) Internationale Anmeldenummer: PCT/EP2003/010463
(87) Internationale Veröffentlichungsnummer: WO 2004/032364

(56) Entgegenhaltungen:
- DE-A- 19 644 503
- US-B1- 6 299 280
- US-B2- 6 433 631
- EDWARD A. LEE, DAVID G. MESSERSCHMITT: "Digital Communication" 1990 , KLUWER ACADEMIC PUBLISHERS , BOSTON XP002268775 Seite 426, letzter Absatz -Seite 430, Absatz 3

## Beschreibung

### Technisches Gebiet

Die Erfindung bezieht sich auf Drehübertrager zur Übertragung digitaler Signale zwischen mehreren gegeneinander drehbar beweglichen Einheiten.

Der Übersichtlichkeit halber wird in diesem Dokument nicht zwischen der Übertragung zwischen gegeneinander beweglichen Einheiten und einer feststehenden und dazu beweglichen Einheiten unterschieden, da dies nur eine Frage des Ortsbezugs ist und keinen Einfluss auf die Funktionsweise der Erfindung hat. Ebenso wird nicht weiter zwischen der Übertragung von Signalen und Energie unterschieden, da die Wirkungsmechanismen hier die selben sind.

### Stand der Technik

Bei drehbaren Einheiten wie Radaranlagen oder auch Computertomographen und auch bei linear beweglichen Einheiten wie Kran- und Förderanlagen ist es notwendig, zwischen gegeneinander beweglichen Einheiten elektrische Signale bzw. Energie zu übertragen. Hierzu ist meist eine Leiterstruktur in der ersten Einheit und ein entsprechender Abgriff in der zweiten Einheit vorgesehen. In den folgenden Ausführungen bezieht sich der Begriff Leiterstrukturen auf alle denkbaren Formen von Leiterstrukturen, welche geeignet sind, elektrische Signale zu führen. Dies bezieht sich auch auf die bekannten kontaktierenden Schleifbahnen bzw. Schleifringe. Wesentlich bei der Übertragung mittels Drehübertragern bzw. linearer " Schleifleitungen ", welche auch kontaktlos ausgeführt sein können, ist die geringe Distanz der Übertragung zwischen den gegeneinander beweglichen Einheiten. So kann das Signal wahlweise galvanisch oder im Nahfeld der Leiterstrukturen ausgekoppelt werden.

Eine entsprechende Vorrichtung ist in der deutschen Offenlegungsschrift DE 44 12 958 A1 beschrieben. Das zu übertragende Signal wird hier in eine Streifenleitung der ersten Einheit, welche längs des Weges der Bewegung der gegeneinander beweglichen Einheiten angeordnet ist, eingespeist. Mittels kapazitiver oder induktiver Kopplung wird das Signal von der zweiten Einheit abgegriffen.

Der Koppelfaktor des Signals zwischen den beiden Einheiten hängt im wesentlichen von dem Abstand der beiden Einheiten zueinander ab. Gerade bei räumlich ausgedehnten Übertragungssystemen und insbesondere bei hohen Bewegungsgeschwindigkeiten lassen sich auf Grund mechanischer Toleranzen die Abstände zwischen den beweglichen Einheiten nicht beliebig exakt festlegen. Diese können in der Praxis in einem Bereich von einer direkten Berührung bis einige Zentimeter Abstand, vorzugsweise zwischen, 0.01 mm und 10 mm variieren. Daher variiert der Koppelfaktor häufig mit der Position der beiden Einheiten zueinander, der Geschwindigkeit (z. B. durch Verursachung von Vibrationen) und anderen Einflussgrößen. Gleichzeitig ändert sich die Signalamplitude am Eingang des Empfängers. Dadurch ergeben sich bei herkömmlich aufgebauten Empfängern Veränderungen im Signal, welche sich beispielsweise als erhöhter Jitter oder sogar Bitfehler bemerkbar machen. Ebenso ergeben sich hierbei Änderungen der Störfestigkeit.

Eine Verbesserung der Übertragungseigenschaften bringt die in der DE 197 00 110 A1 veröffentlichte Vorrichtung, welche an Stelle einer Streifenleitung eine Leiterstruktur mit Filtereigenschaften aufweist. Grundsätzlich bleiben aber die Probleme bestehen.

Aus der US 6,433,631 B2 ist eine Vorrichtung zur Regelung des Eingangspegels am Empfänger offenbart. Hierzu wird die Signalamplitude nach einem Vorverstärker gemessenen und entsprechend dieser Signalamplitude ein vor dem Vorverstärker vorgesehenes Dämpfungsglied gesteuert. Der Nachteil dieser Anordnung ist, dass hierdurch ausschließlich dem Empfänger ein Signal mit konstanter Amplitude zur Verfügung gestellt werden kann.

In der DE 196 44 503 A1 ist eine Drehkupplung offenbart, bei der der Frequenzgang des zu übertragenden Signals an die Übertragungseigenschaften der Koppeleinrichtung angepasst wird.

Der Nachteil der dem Stand der Technik entsprechenden Vorrichtungen liegt in einer noch unzureichenden Störfestigkeit. So können zwar die Sendesignalpegel in der Leitung erhöht werden, um die Störfestigkeit zu verbessern. Damit steigt aber auch die unerwünschte Abstrahlung hochfrequenter Signale. Bei einer Verringerung des Sendesignalpegels sinkt zwar die Abstrahlung, aber die Immunität gegen eingestreute Störungen von außen sinkt ebenfalls.

### Darstellung der Erfindung

Es stellt sich die Aufgabe, eine Vorrichtung zur Drehübertragung elektrischer Signale zu gestalten, welche die oben aufgezeigten Nachteile vermeidet und insbesondere eine hohe Störfestigkeit und somit eine hohe Übertragungsqualität der Signale aufweist.

Die Aufgabe wird erfindungsgemäß mit den in den unabhängigen Ansprüchen angegebenen Mitteln gelöst. Vorteilhafte Weiterbildungen der Erfindung sind Gegenstand der abhängigen weiteren Ansprüche.

Eine erfindungsgemäße Vorrichtung dient zur Übertragung digitaler Signale zwischen wenigstens zwei gegeneinander drehbaren Einheiten, vorzugsweise als Drehübertrager, wie sie beispielsweise im Computertomografen einsetzbar sind. Selbstverständlich können auf jeder Seite der Bewegung eine oder mehrere Einheiten angeordnet sind. Zur vereinfachten Darstellung wird hier ausschließlich auf eine zweite Einheit, welche gegenüber einer ersten Einheit drehbar beweglich ist, Bezug genommen.
Der ersten Einheit ist eine Datenquelle (1) zur Erzeugung eines seriellen Datenstroms, wie beispielsweise ein dem Stand der Technik entsprechender Parallele/Seriell - Wandler zugeordnet. Weiterhin ist ein Sender (2) vorgesehen, der aus dem seriellen Datenstrom der Datenquelle elektrische Signale zu Übertragung über eine Sendeleiterstruktur (3) erzeugt. Der zweiten Einheit ist eine Empfangsantenne (4) zum Abgriff elektrische Signale im Nahfeld der Sendeleiterstruktur zugeordnet. Die elektrischen Signale der Empfangsantenne werden über einen Empfänger (5) einer Datensenke (6) zur Weiterverarbeitung der Signale zugeführt.

Erfindungsgemäß ist nun eine Kodiereinrichtung (7) zwischen Datenquelle (1) und Sender (2) vorgesehen. Diese Kodiereinrichtung ist derart ausgelegt, dass sie die digitale Kodierung des Datenstroms derart umsetzt, dass die Daten mit minimalen Fehlern über Sender (2), Sendeleiterstruktur (3), Empfangsantenne (4) sowie Empfänger (5) übertragbar sind.

Entsprechend dem Wesen der Erfindung ist die Kodiereinrichtung in dem elektrischen Signalpfad zwischen Datenquelle (1) und Sender (2) vorgesehen. Selbstverständlich kann diese Kodiereinrichtung auch in dem Sender (2) angeordnet sein.

Weiterhin ist der zweiten Einheit zwischen Empfänger (5) und Datensenke (6) eine Dekodiereinrichtung (9) zur Dekodierung der von der Kodiereinrichtung (7) kodierten Signale zugeordnet. Durch diese Dekodiereinrichtung wird die Kodierung der Kodiereinrichtung wieder rückgängig gemacht, so dass die der Datensenke zugeführten Signale dem Datenstrom der Datenquelle (1) entsprechen. Selbstverständlich kann die Dekodiereinrichtung auch im Empfänger (5) angeordnet sein. Somit ist die Kodierung zum optimalen Transport der Daten auf der Datenstrecke für Datenquelle bzw. Datensenke vollkommen transparent.

Erfindungsgemäß erfolgt durch die Kodierung des Datenstroms mittels der Kodiereinrichtung (7) eine Umsetzung der spektralen Eigenschaften des Datenstroms. So erfolgt die Kodierung derart, dass die Leistung des Signals in vorgegebenen Spektralbereichen wahlweise erhöht oder abgesenkt wird. Durch eine Anpassung der spektralen Eigenschaften des Signals kann die Übertragungsqualität an den Frequenzgang der übrigen Übertragungsstrecke sowie an vorhandene Störer bzw. störempfindliche Komponenten angepasst werden.

Weist die Datenstrecke zwischen Sender und Empfänger beispielsweise in einem oder mehreren bekannten Frequenzbereichen eine besonders hohe Dämpfung auf, so kann nun vorteilhafterweise die Kodierung derart ausgelegt werden, dass dieser Frequenzbereich zur Übertragung nicht verwendet wird. Im umgekehrten Fall kann bei Frequenzbereichen besonders niedriger Dämpfung durch geeignete Kodierung ein Maximum im diese Frequenzbereiche gelegt werden.

Sind externe Störer vorhanden, welche die Übertragung der Signale beeinträchtigen, so wird die Kodierung vorteilhafterweise derart vorgenommen, dass wahlweise diese Frequenzbereiche ausgespart werden. Alternativ dazu könnte auch in diesen Frequenzbereichen eine besonders hohe Amplitude abgegeben werden.

Sind besonders störempfindliche Komponenten außerhalb der Datenstrecke vorhanden, so kann durch die Kodierung das Spektrum des übertragenen Signals derart angepasst werden, dass in dem Frequenzbereichen hoher Störempfindlichkeit nur geringe Signalpegel abgegeben werden. Grundsätzlich kann hier auch das bekannte Linienspektrum digitaler Signale durch eine geeignete Kodierung verbreitert werden, um die nach den gängigen EMV-Normen gemessenen Grenzwerte einzuhalten.

Die Kodierung erfolgt vorteilhafterweise derart, dass das übertragene Signal gleichstromfrei ist.

Weiterhin ist die Art der Kodierung dynamisch einstellbar, so dass diese sich vorteilhafter Weise an durch die Bewegung hervorgerufene Änderungen anpassen kann. Hierzu ist vorteilhafterweise eine Steuereinheit mit Mitteln zur Ermittlung des aktuellen Betriebszustandes und einer entsprechenden Vorgabe der Kodierung an die Kodiereinrichtung vorgesehen. So kann beispielsweise die Kodierung positionsabhängig vorgegeben werden. Ein Positionssensor könnte die relative Position der gegeneinander drehbaren Teile signalisieren und eine entsprechende Kodierung vorgeben. Ebenso kann eine zeitabhängige Kodierung vorgegeben werden. Dies ist insbesondere bei konstanter Drehgeschwindigkeit vorteilhaft, da hier wieder eine Zuordnung zur Position möglich ist.

Alternativ sieht die Erfindung vor, dass die Kodierungsfunktion der Kodiereinrichtung zeitabhängig variiert wird, um die Einflüsse zeitabhängiger Störer zu kompensieren. So kann beispielsweise die Kodierung entsprechend der Störspitzen einer Stromversorgung, einer Röntgenröhre oder eines Elektromotors angepasst werden.

Alternativ sieht die Erfindung vor, dass die Kodierungsfunktion der Kodiereinrichtung in Abhängigkeit von elektrischen Messgrößen angepasst wird. So kann beispielsweise eine Messgröße entsprechend einem Störpegel der Übertragungseinrichtung ermittelt werden. Diese Messgröße kann nun wahlweise analog zur Anpassung bestimmter spektraler Anteile derart herangezogen werden, dass die in den gestörten Frequenzbereichen übertragenen spektraler in Anteile des Nutzsignals in ihrer Amplitude angehoben werden. Ebenso kann diese Messgröße zu Signalisierung einer Verschiebung der spektralen Anteile des Nutzsignals in ungestörte Bereiche herangezogen werden. Weiterhin kann auch die Messgröße zur Auslösung einer Umschaltung einer anderen spektralen Amplitudeverteilung des Nutzsignals herangezogen werden.

Erfindungsgemäß kann eine dynamische Anpassung zu Beginn einer Übertragung erfolgen, wobei während der Übertragungsdauer die zu Beginn vorgenommenen Anpassungen bzw. Einstellungen beibehalten werden. Ebenso ist aber auch eine dynamische Anpassung während der gesamten Übertragungsdauer möglich.

In einer Ausgestaltung der Erfindung ist die Kodiereinrichtung derart gestaltet, dass sie zusätzliche Redundanz in dem Datenstrom einbringt. Durch diese zusätzliche Redundanz werden weitergehende Korrekturen der Informationen des Datenstroms im Falle von Übertragungsfehlern ermöglicht. Diese Korrekturen können nun wahlweise von der Datensenke, bevorzugt aber von einer Dekodiereinrichtung vorgenommen werden.

In einer anderen Ausgestaltung der Erfindung ist die Kodiereinrichtung derart ausgelegt, dass sie die Datenrate des seriellen Datenstroms erhöht und somit Raum für zusätzliche redundante Informationen schafft. Vorteilhafterweise erfolgt eine solche Umsetzung der Datenrate oder auch wahlweise eine zuvor beschriebene Umsetzung der Kodierung bzw. der Paket Informationen durch Umsetzung des seriellen Datenstroms der Datenquellen in parallele Datenworte, welche leicht modifiziert werden können, sowie die anschließende Umsetzung in einen geänderten seriellen Datenstrom zur Übertragung.

Eine weitere erfindungsgemäße Vorrichtung weist eine Kodiereinrichtung auf, welche zur Erhöhung der Sicherheit die zu übertragenden Signale kodiert bzw. verschlüsselt. Entsprechend der Sicherheitsanforderungen kann hierzu ein kürzerer oder längerer Schlüssel verwendet werden. Entsprechend den Mittel zur Entschlüsselung können kann wahlweise in der Datensenke bzw. in der Dekodiereinrichtung vorgesehen sein.

Eine andere Ausgestaltung der Erfindung sieht vor, dass wahlweise in der Kodiereinrichtung (7) beziehungsweise in der Dekodiereinrichtung (8) Mittel zur Taktregeneration vorgesehen sind. Weiterhin können an beliebiger Stelle der Datenstrecke Mittel zur Taktregeneration vorgesehen sein. Durch die Taktregeneration eines Signals erfolgt die Synchronisation des Signals auf einen Takt konstanter Frequenz, welcher meist mit Hilfe einer PLL aus dem Datenstrom gewonnen wird. Dadurch kann die Kurvenformen des Signals wesentlich verbessert werden. So hat das regenerierte Signal wieder klare Flanken mit reduziertem Jitter und folglich einer vergrößerten Augenöffnung.

In einer anderen Ausgestaltung der Erfindung ist wenigstens ein Filter wahlweise dem Sender (2) beziehungsweise dem Empfänger (5) zugeordnet. Dieses Filter dient zur Anpassung an die Übertragungseigenschaften der Datenstrecke zwischen Sender und Empfänger. So lassen sich insbesondere auf Seiten des Empfängers frequenzabhängige Amplituden- und Phasengänge korrigieren. Durch derartige Filter können auch externe Störungen reduziert werden.

Eine andere vorteilhafte Ausgestaltung des Erfindung besteht darin, dass das Filter dynamisch einstellbar ist. Gerade bei beweglichen Einheiten ändert sich die Übertragungscharakteristik dynamisch während der Bewegung. Diese kann durch dynamische Filtereinstellung kompensiert werden. Ein solches Filter kann beispielsweise durch einen Mikrocontroller oder durch eine einfache Regelschaltung gesteuert werden.

In einer weiteren vorteilhaften Ausgestaltung ist die Vorrichtung selbstlernend bzw. adaptiv ausgelegt. Dies bedeutet, dass sie sich dynamisch, insbesondere während der Bewegung, an die Betriebszustände anpasst. Dies erfolgt durch Ermittlung bestimmter Betriebsparameter, wie Bitfehlerrate, Signalamplitude etc. und anschließende Einstellung von Kodiereinrichtung bzw. Dekodiereinrichtung bzw. den Filtern. Besonders günstig ist deshalb, hier einen Fuzzy-Controller einzusetzen. So kann beispielsweise die Redundanz bzw. die Datenrate als Funktion der Übertragungsfehler eingestellt werden. Dies bedeutet, dass bei einer hohen Anzahl von Übertragungsfehlern beispielsweise eine höhere Redundanz vorgesehen wird. Gerade bei Drehbewegungen, insbesondere mit konstanter Geschwindigkeit, ist es vorteilhaft, die Übertragungsfunktion über die Umdrehung zu speichern und entsprechend abhängig von der Zeit bzw. der Position die Einstellung von Kodiereinrichtung bzw. Dekodiereinrichtung bzw. Filtern vorzunehmen. Dies ist selbstverständlich auch bei linearen Bewegungen möglich, sofern eine Information über die Position vorhanden ist.

Ein entsprechendes erfindungsgemäßes Verfahren zur breitbandigen Übertragung digitaler Signale sieht vor, dass die Signale derart kodiert werden, dass die spektrale Leistungsdichte der Signale in vorgegebenen spektralen Bereichen wahlweise erhöht oder abgesenkt wird.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.

Fig. 1 zeigt in allgemeiner Form schematisch einen erfindungsgemäßen Drehübertrager.

Fig. 2 zeigt in allgemeiner Form schematisch eine erfindungsgemäße Vorrichtung zur linearen Übertragung.

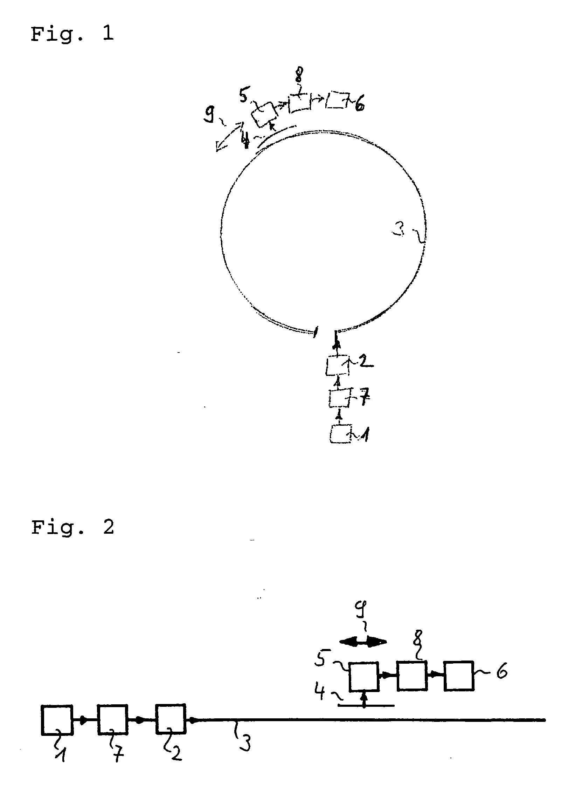

In der Fig. 1 ist eine besonders vorteilhafte Ausführungsform eines erfindungsgemäßen Drehübertragers abgebildet. Die Daten einer Datenquelle (1) werden über eine Kodiereinrichtung (7) und einen Sender (2) an eine kreisförmig angeordnete Sendeleiterstruktur (3) übertragen. Die Sendeleiterstruktur ist entlang der Bahn der Bewegung, die durch den Richtungspfeil (9) angedeutet ist, angeordnet und führt die durch den Sender eingespeisten Signale. Eine Empfangsantenne (4) ermöglicht einen Abgriff der Signale des Nahfeldes der Sendeleiterstruktur. Die von der Antenne abgegriffenen Signale werden über einen Empfänger (5) und eine Dekodiereinrichtung (8) zur Datensenke (6) geleitet.

Fig. 2 zeigt eine Vorrichtung zur linearen Übertragung. Da die Geometrie der Übertragungseinrichtung bzw. die Bahn der Bewegung grundsätzlich keinen Einfluß auf die Ausgestaltung der Erfindung hat, entsprechen die Bezugszeichen denen aus Fig. 1.

### Bezugszeichenliste

- 1: Datenquelle
- 2: Sender
- 3: Sendeleiterstruktur
- 4: Empfangsantenne
- 5: Empfänger
- 6: Datensenke
- 7: Kodiereinrichtung
- 8: Dekodiereinrichtung
- 9: Richtungspfeil für Bewegungsrichtung

## Patentansprüche

1. Drehübertrager zur elektrischen Übertragung breitbandiger digitaler Signale zwischen wenigstens einer ersten Einheit und mindestens einer relativ gegenüber der ersten Einheit drehbar angeordneten zweiten Einheit umfassend der ersten Einheit zugeordnet
- eine Datenquelle (1) zur Erzeugung eines seriellen Datenstroms,
- einen Sender (2) zur Erzeugung elektrischer Signale aus dem seriellen Datenstrom der Datenquelle,
- eine Sendeleiterstruktur (3) zur Führung der vom Sender erzeugten elektrischen Signale,
sowie der zweiten Einheit zugeordnet
- eine Empfangsantenne (4) zum Abgriff von elektrischen Signalen im Nahfeld der Sendeleiterstruktur,
- einen Empfänger (5) zum Empfang der von der Empfangsantenne abgegriffenen Signale,
- eine Datensenke (6) zur Weiterverarbeitung der Signale des Empfängers,
**dadurch gekennzeichnet, dass**
eine Kodiereinrichtung (7) zwischen Datenquelle (1) und Sender (2) vorgesehen ist, welche die digitale Kodierung des Datenstroms derart umsetzt, dass in vorgegebenen spektralen Bereichen die Leistung wahlweise erhöht oder abgesenkt wird und weiterhin zwischen Empfänger (5) und Datensenke (6) eine Dekodiereinrichtung (8) vorgesehen ist, welche aus den durch die Kodiereinrichtung (7) kodierten Daten die Daten in der ursprünglichen Form, wie sie von der Datenquellen (1) abgegeben wurden, wiederherstellt und dass die Kodierungsfunktion der Kodiereinrichtung dynamisch als Funktion des Ortes der Drehbewegung der beiden Einheiten gegeneinander und / oder als Funktion der Zeit und / oder als Funktion einer elektrischen Messgröße, welche elektrische Pegel, insbesondere Störpegel an Sendeleiterstruktur (3), Empfangsantenne (4) und/oder Empfänger (5) signalisiert, einstellbar ist.

2. Vorrichtung nach Anspruch 1,
**dadurch gekennzeichnet, dass**
die Kodiereinrichtung (7) derart ausgestaltet ist, dass sie zusätzliche Redundanz in den Datenstrom einbringt.

3. Vorrichtung nach einem der vorhergehenden Ansprüche,
**dadurch gekennzeichnet, dass**
die Kodiereinrichtung (7) derart ausgestaltet ist, dass sie die Datenrate des seriellen Datenstroms erhöht bzw. verringert.

4. Vorrichtung nach einem der vorhergehenden Ansprüche,
**dadurch gekennzeichnet, dass**
die Kodiereinrichtung (7) Mittel zur Verschlüsselung des seriellen Datenstroms der Datenquelle (1) aufweist.

5. Vorrichtung nach einem der vorhergehenden Ansprüche,
**dadurch gekennzeichnet, dass**
wahlweise die Kodiereinrichtung (7) beziehungsweise die Dekodiereinrichtung (8) Mittel zur Taktregeneration aufweisen.

6. Vorrichtung nach einem der vorhergehenden Ansprüche,
**dadurch gekennzeichnet, dass**
wahlweise dem Sender (2) beziehungsweise dem Empfänger (5) zugeordnet wenigstens ein Filter zur Anpassung an die Übertragungseigenschaften der Datenstrecke zwischen Sender und Empfänger vorgesehen ist.

7. Vorrichtung nach Anspruch 6,
**dadurch gekennzeichnet, dass**
das Filter dynamisch einstellbar ist.

8. Vorrichtung nach einem der vorhergehenden Ansprüche,
**dadurch gekennzeichnet, dass**
die Vorrichtung selbstlernend ist und sich an die jeweiligen Betriebszustände durch Ermittlung bestimmter Betriebsparameter, wie Bitfehlerrate, Signalamplitude etc. und anschließende Einstellung von Kodiereinrichtung bzw. Dekodiereinrichtung und/oder den Filtern dynamisch anpasst.

9. Verfahren zur breitbandigen Übertragung digitaler Signale zwischen wenigstens einer ersten Einheit und mindestens einer relativ gegenüber der ersten Einheit drehbar angeordneten zweiten Einheit umfassend die folgenden Schritte:
- Erzeugung eines seriellen Datenstroms durch eine der ersten Einheit zugeordnete Datenquelle (1),
- Kodierung des Datenstroms derart, dass die spektrale Leistungsdichte der Signale in vorgegebenen spektralen Bereichen dynamisch als Funktion des Ortes der Drehbewegung der beiden Einheiten gegeneinander und / oder als Funktion der Zeit und / oder als Funktion einer elektrischen Messgröße, welche elektrische Pegel, insbesondere Störpegel an Sendeleiterstruktur (3), Empfangsantenne (4) und/oder Empfänger (5) signalisiert, wahlweise erhöht oder abgesenkt wird,
- Erzeugung elektrischer Signale aus dem seriellen Datenstrom der Datenquelle durch einen Sender (2),
- Führung der vom Sender erzeugten elektrischen Signale durch eine Sendeleiterstruktur (3),
- Abgriff von elektrischen Signalen im Nahfeld der Sendeleiterstruktur durch eine der zweiten Einheit zugeordnete Empfangsantenne (4),
- Empfang der von der Empfangsantenne abgegriffenen Signale durch einen Empfänger (5),
- Dekodierung der Signale durch eine Dekodiereinrichtung (9), und
- Weiterverarbeitung der Signale des Empfängers durch eine Datensenke (6).

## Claims

1. Rotating data transmission device for electrical transmission of broadband digital signals between at least one first unit and at least one second unit disposed to be rotatable relative to the first unit, comprising in association with the first unit:
- a data source (1) for generating a serial data stream;
- a transmitter (2) for generating electrical signals from the serial data stream of the data source;
- a transmission conductor structure (3) for carrying the electrical signals generated by the transmitter;
and in association with the second unit:
- a receiving antenna (4) for tapping-off electrical signals in a near field of the transmission conductor structure;
- a receiver (5) for receiving the signals tapped-off by the receiving antenna;
- a data sink (6) for further processing the signals received by the receiver;
**characterized in that**
an encoder (7) is provided between the data source (1) and the transmitter (2) for converting a digital coding of the data stream so that the power in given spectral ranges is optionally increased or lowered; and that furthermore a decoder (8) is provided between the receiver (5) and the data sink (6) for restoring, from the data encoded by the encoder (7), the data in an original form as issued by the data sources (1); and that the encoding function of the encoder is adapted to be set dynamically as a function of a location of the rotary movement of the two units relative to each other, and/or as a function of time, and/or as a function of an electrical measurement parameter signalizing electrical levels, in particular interference levels, in the transmission conductor structure (3), the receiver antenna (4), and/or the receiver (5).

2. Device according to claim 1,
**characterized in that**
the encoder (7) is adapted to introduce additional redundancy into the data stream.

3. Device according to any one of the preceding claims,
**characterized in that**
the encoder (7) is adapted to increase or decrease the data rate of the serial data stream.

4. Device according to any one of the preceding claims,
**characterized in that**
the encoder (7) comprises means for enciphering the serial data stream of the data source (1).

5. Device according to any one of the preceding claims,
**characterized in that**
optionally the encoder (7) or the decoder (8) comprises means for timing recovery.

6. Device according to any one of the preceding claims,
**characterized in that**
at least one filter, optionally assigned to the transmitter (2) or the receiver (5), is provided for matching to the transmission characteristics of the data path between the transmitter and the receiver.

7. Device according to claim 6,
**characterized in that**
the filter is adapted to be set dynamically.

8. Device according to any one of the preceding claims,
**characterized in that**
the device is self-learning and dynamically adapts to the prevailing operating states by determining certain operating parameters such as the bit error rate, the signal amplitude etc. and subsequently setting the encoder or decoder, and/or the filters.

9. Method for broadband transmission of digital signals between at least one first unit and at least one second unit disposed to be rotatable relative to the first unit, comprising the following steps:
- generating a serial data stream with a data source (1) assigned to the first unit;
- encoding the data stream so that the spectral power density of the signals in given spectral regions is optionally increased or lowered dynamically as a function of the location of the rotary movement of the two units relative to each other, and/or as a function of time, and/or as a function of an electrical measurement parameter that signals electrical levels, in particular interference levels, to a transmission conductor structure (3), a receiving antenna (4), and/or a receiver (5);
- generating electrical signals from the serial data stream of the data source with a transmitter (2);
- conducting the electrical signals generated by the transmitter through the transmission conductor structure (3);
- tapping-off electrical signals in a near field of the transmission conductor structure with a receiving antenna (4) assigned to the second unit;
- receiving the signals tapped-off by the receiving antenna with a receiver (5);
- decoding the signals with a decoder (9); and
- further processing the signals of the receiver by a data sink.

## Revendications

1. Transmetteur rotatif destiné à la transmission électrique de signaux numériques large bande entre au moins une première unité et au moins une deuxième unité disposée de manière rotative par rapport à la première unité, comprenant, de manière associée à la première unité
- une source de données (1) pour générer un flux de données série,
- un émetteur (2) pour générer des signaux électriques à partir du flux de données série de la source de données,
- une structure conductrice d'émission (3) pour guider des signaux électriques générés par l'émetteur,
ainsi que de manière associée à la deuxième unité
- une antenne de réception (4) pour capter des signaux électriques dans le champ proche de la structure conductrice d'émission,
- un récepteur (5) pour recevoir les signaux captés par l'antenne de réception,
- un collecteur de données (6) pour traiter les signaux du récepteur,
**caractérisé en ce**
**qu'**il est prévu un dispositif de codage (7) entre la source de données (1) et l'émetteur (2), lequel applique le codage numérique du flux de données de manière telle que la puissance est au choix augmentée ou diminuée dans des plages spectrales prédéfinies, et qu'il est prévu en plus entre le récepteur (5) et le collecteur de données (6) un dispositif de décodage (8), lequel à partir des données codées par le dispositif de codage (7) reconstitue les données dans leur forme originale, telles qu'elles avaient été fournies par la source de données (1), et en ce que la fonction de codage du dispositif de codage peut être réglée de manière dynamique en fonction du lieu du mouvement rotatif des deux unités l'une par rapport à l'autre, et/ou en fonction du temps, et/ou en fonction d'une grandeur mesurée électrique qui signale des niveaux électriques, en particulier des niveaux de brouillage à une structure conductrice d'émission (3), une antenne de réception (4) et/ou un récepteur (5).

2. Dispositif selon la revendication 1,
**caractérisé en ce que**
le dispositif de codage (7) est conçu de manière telle qu'il apporte une redondance supplémentaire dans le flux de données.

3. Dispositif selon l'une quelconque des revendications précédentes,
**caractérisé en ce que**
le dispositif de codage (7) est conçu de manière telle qu'il augmente ou diminue le débit de données du flux de données série.

4. Dispositif selon l'une quelconque des revendications précédentes,
**caractérisé en ce que**
le dispositif de codage (7) présente des moyens de cryptage du flux de données série de la source de données (1).

5. Dispositif selon l'une quelconque des revendications précédentes,
**caractérisé en ce**
**que**, au choix, le dispositif de codage (7) respectivement le dispositif de décodage (8) présentent des moyens de régénération de fréquence.

6. Dispositif selon l'une quelconque des revendications précédentes,
**caractérisé en ce**
**qu'**il est prévu au moins un filtre, faisant partie au choix de l'émetteur (2) respectivement du récepteur (5), pour réaliser une adaptation aux propriétés de transmission de la voie de données entre l'émetteur et le récepteur.

7. Dispositif selon la revendication 6,
**caractérisé en ce que**
le filtre est réglable de manière dynamique.

8. Dispositif selon l'une quelconque des revendications précédentes,
**caractérisé en ce que**
le dispositif est autoadaptatif et qu'il s'adapte aux états de fonctionnement momentanés en déterminant certains paramètres de fonctionnement, tels que le taux d'erreur binaire, l'amplitude du signal etc. et adapte de manière dynamique le réglage subséquent du dispositif de codage respectivement du dispositif de décodage et/ou des filtres.

9. Procédé, destiné à la transmission large bande de signaux numériques entre au moins une première unité et au moins une deuxième unité disposée de manière rotative par rapport à la première unité, comprenant les étapes consistant à :
- générer un flux de données série par une source de données (1) associée à la première unité,
- coder le flux de données de manière telle que la densité spectrale de puissance des signaux dans des plages spectrales prédéfinies est, au choix, augmentée ou diminuée de manière dynamique en fonction du lieu du mouvement rotatif des deux unités l'une par rapport à l'autre, et/ou en fonction du temps, et/ou en fonction d'une grandeur mesurée électrique qui signale des niveaux électriques, en particulier des niveaux de brouillage à la structure conductrice d'émission (3), l'antenne de réception (4) et/ou au récepteur (5),
- générer par un émetteur (2) des signaux électriques à partir du flux de données série de la source de données,
- guider par une structure conductrice d'émission (3) des signaux électriques générés par l'émetteur,
- capter des signaux électriques dans le champ proche de la structure conductrice d'émission par une antenne de réception (4) associée à la deuxième unité,
- recevoir les signaux captés par l'antenne de réception par un récepteur (5),
- décoder les signaux par un dispositif de décodage (9), et
- traiter les signaux du récepteur par un collecteur de données (6).
